# EUROPEAN PATENT SPECIFICATION

(11) **EP 1 634 740 B1**
(45) Date of publication and mention of the grant of the patent: **07.01.2009**
(21) Application number: 05019684.9
(22) Date of filing: 09.09.2005
(51) Int. Cl.: B60H 1/34

(54) **Air distribution apparatus**
Luftverteilungsvorrichtung
Dispositif de distribution d'air

(30) Priority: 09.09.2004 US 608263 P; 30.08.2005 US 215094
(43) Date of publication of application: 15.03.2006
(73) Proprietor: Dometic Corporation, Elkhart, Indiana 46515-0490 (US)
(72) Inventor: Malott, Dale G., Middlebury Indiana 46540 (US); Beck, Carl B., Goshen Indiana 46528 (US)
(74) Representative: Grosse - Schumacher - Knauer - von Hirschhausen

(56) References cited:
- GB-A- 1 177 390
- US-A- 3 264 971
- US-A- 4 610 196
- US-A- 4 892 288

## Description

### FIELD OF THE INVENTION

The present invention relates to air distribution apparatus, and more particularly to air distribution apparatus including a pivoting duct.

### BACKGROUND OF THE INVENTION

Motor vehicles, such as long distance or over the road trucks, often include HVAC systems to provide comfort for occupants located in living spaces of a vehicle. For example, it is known to provide an HVAC system with an air distribution apparatus located on the ceiling to direct air from a duct to the living spaces within the unit. Air may be directed generally outward from the vent. However, it would be desirable to provide an air distribution apparatus that is capable of selectively dispensing air along the side of the air distribution apparatus in addition to outwardly from the apparatus.

Document US 3 264 971, which is considered as the closest prior art, discloses an air distribution apparatus comprising a duct pivotally connected to a housing, in order to provide air distribution towards a great range of directions.

### SUMMARY OF THE INVENTION

Accordingly, it is an aspect of the present invention to obviate problems and shortcomings of conventional air distribution apparatus, in particular to improve air distribution towards a greater range of directions.

In accordance with one aspect, an air distribution apparatus comprises an air distribution housing including an outer wall and an interior area. The air distribution apparatus further includes a duct pivotally connected to the housing and configured to pivot about a first axis from a retracted position to an extended position. A portion of the duct is received in the interior area of the housing in the retracted position and the portion of the duct extends outside of the interior area in the extended position and wherein the duct includes an air outlet opening, wherein the outlet opening is provided with an air diverter apparatus rotatable about a second axis and adapted to selectively change the direction of air flowing from the air outlet opening, wherein the first and second axes are arranged orthogonally to each other.

In accordance with another aspect, an air distribution apparatus comprises an adapter configured to be attached with respect to an opening of an air distribution housing. The air distribution apparatus further includes a duct pivotally connected to the adapter and configured to pivot about an axis from a retracted position to an extended position with respect to the adapter.

### BRIEF DESCRIPTION OF THE DRAWINGS

The foregoing and other aspects of the present invention will become apparent to those skilled in the art to which the present invention relates upon reading the following description with reference to the accompanying drawings, in which:
FIG. 1 depicts an example of an air distribution apparatus comprising an air distribution housing and a plurality of duct assemblies mounted to the ceiling of an interior area of a vehicle;
FIG. 2A is an example of an air distribution apparatus comprising a duct and an adapter wherein the duct is pivoted to a retracted position with respect to the adapter;
FIG. 2B depicts the duct and adapter of FIG. 2A with the duct pivoted to an extended position with respect to the adapter;
FIG. 3 is a front view of the duct and adapter of FIG. 2A;
FIG. 4 is a front view of a duct in accordance with one example of the present invention;
FIG. 5 is a top view of the duct of FIG. 4;
FIG. 6 is an exploded view of a duct and an air diverter apparatus in accordance with one example of the present invention; and
FIG. 7 is a partial exploded view illustrating the assembled duct and air diverter apparatus of FIG. 6 being exploded from the adapter.

### DETAILED DESCRIPTION OF EXAMPLE EMBODIMENTS

Certain terminology is used herein for convenience only and is not to be taken as a limitation on the present invention. Further, in the drawings, the same reference numerals are employed for designating the same elements.

In accordance with aspects of the present invention, examples of an air distribution apparatus can be provided for mounting to a wall surface of an interior area of a vehicle. Although not required, the illustrated air distribution apparatus 20 can be mounted to a ceiling 100 of an interior area of a vehicle. In further examples, the air distribution apparatus may be mounted on a side wall, the floor, or other surfaces of the vehicle.

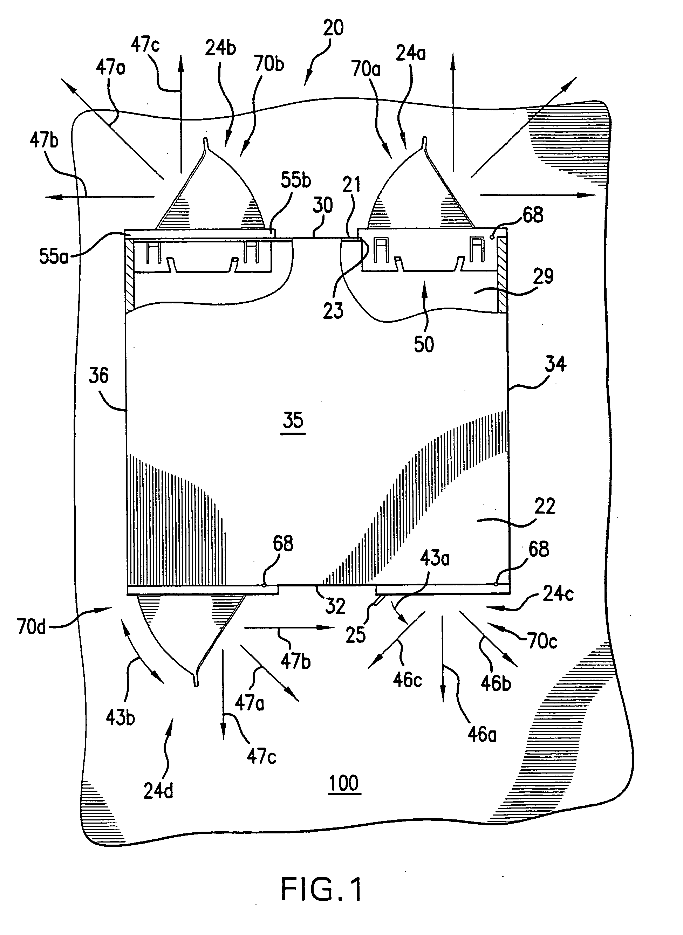

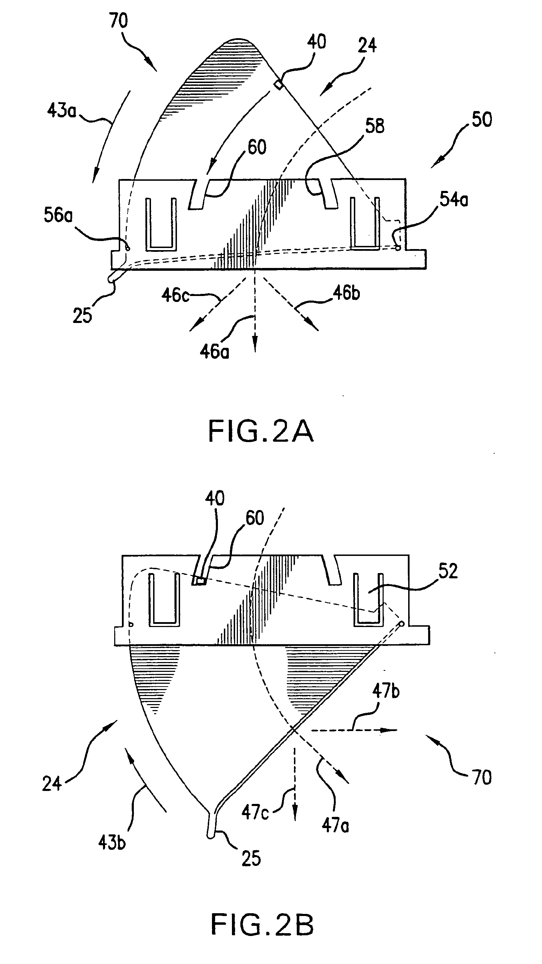

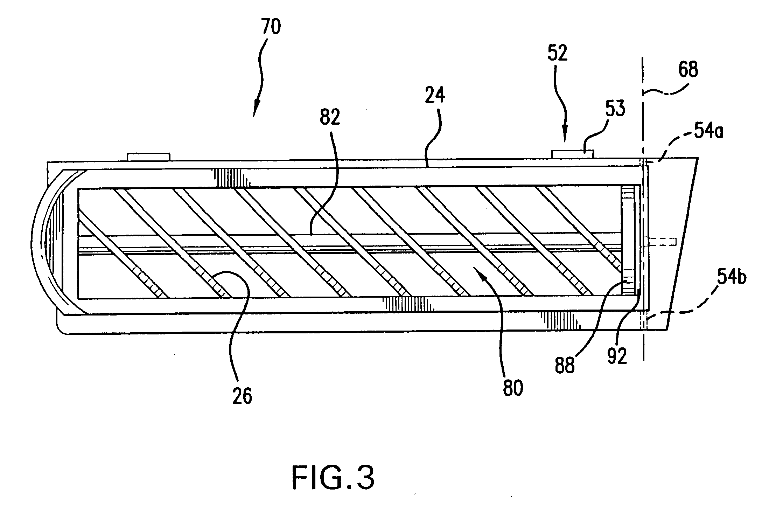

Examples of an air distribution apparatus can include one or more structures illustrated in the figures. For instance, the air distribution apparatus can comprise one or more of a pivoting duct, an air distribution housing and/or an adapter. FIG. 1 depicts an air distribution apparatus 20 comprising an air distribution housing 22 and at least one duct assembly including a pivoting duct (e.g., 24a, 24b, 24c, 24d) and a corresponding adapter 50. In further embodiments, the air distribution apparatus may comprise a pivoting duct directly mounted to an air distribution housing without an adapter. Still further, as shown in FIGS. 2A, 2B and 3, the air distribution apparatus can comprise a duct assembly 70 with a pivoting duct 24 mounted to an adapter 50 without an air distribution housing.

The air distribution housing can comprise a structure that acts as a protective covering for one or more components of a heating, ventilation and air conditioning (HVAC) unit. In addition, or alternatively, the air distribution housing can comprise a structure that cooperates with a portion of an adjacent surface, such as a wall surface or other structure, to provide one or more plenum spaces for defining one or more corresponding air stream paths. As shown in FIG. 1, the air distribution housing 22 can include an outer wall 21 and an interior area 29. The air distribution housing can comprise various materials or combinations of materials to provide sufficient structural integrity while minimizing the weight of the air distribution housing and costs of the materials used to produce the housing. For example, the housing may be fabricated from materials including, but not limited to, a plastic, a metallic and/or a composite material or the like.

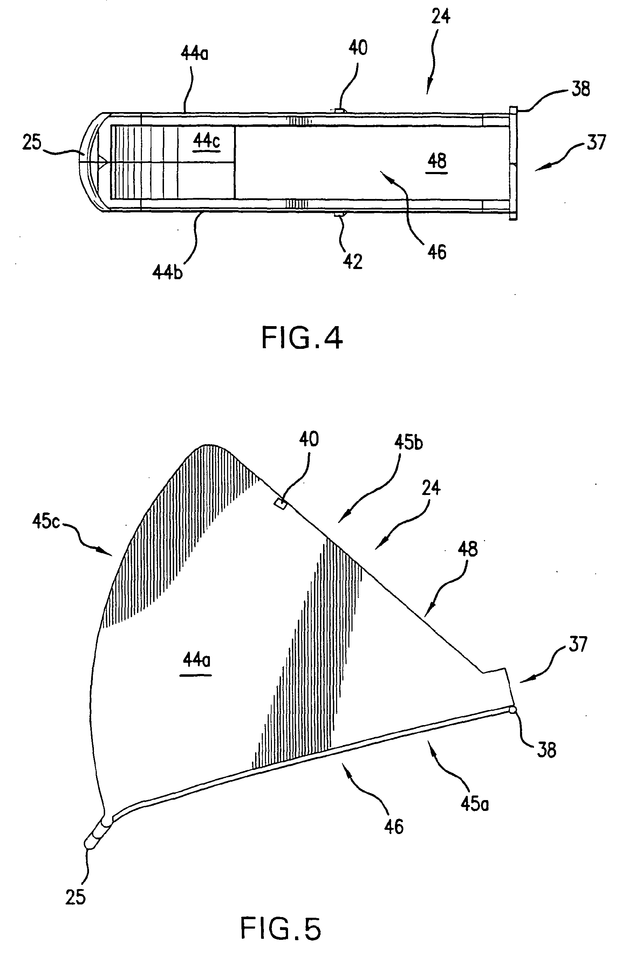

With reference to FIGS. 2A, 2B and 3, the duct assembly 70 provides a duct 24 that can be pivotally connected to the adapter 50 and configured to pivot about an axis 68 from a retracted position (e.g., see FIG. 2A) to an extended position (e.g., see FIG. 2B). FIGS. 4-6 depict one example of a pivoting duct 24 that may be used in accordance with aspects of the present invention. The pivoting duct may comprise various shapes and sizes depending on the particular application. As shown in FIG. 5, the duct 24 can comprise a substantially triangular shape with a first side 45a, a second side 45b, and a third side 45c. A substantially triangular top wall 44a and a substantially triangular bottom wall 44b extend between the first, second and third sides 45a, 45b, 45c of the duct 24. Although not required, the top and bottom walls are illustrated as substantially planar wall portions that are spaced apart and extend parallel with respect to one another. The top and bottom walls 44a, 44b can be spaced from one another by a substantially closed portion 44c of the third side 45c and an opposed pivot structure 37. The spaced apart top and bottom walls 44a, 44b provide the first side 45a of the duct 24 with an air outlet opening 46 and also provide the second side 45b of the duct 24 with an air inlet opening 48.

The substantially closed portion 44c can comprise a variety of shapes in accordance with aspects of the present invention. For example, the substantially closed portion 44c can comprise a straight wall, a plurality of straight wall segments, or other wall shapes. In one example, the closed portion can comprise a substantially curved wall. The substantially curved wall, if provided, can be approximated by a plurality of substantially straight wall segments. Alternatively, as shown, the substantially curved wall can comprise a continuously curved wall segment. Providing a substantially curved wall can help bend the air stream as it passes from the air inlet opening 48 to the air outlet opening 46. Moreover, providing a continuously curved wall segment can reduce air flow resistance as the air stream travels from the air inlet opening to the air outlet opening of the duct.

Although not required, the substantially curved wall can optionally extend about the pivot axis 68 such that the curved wall is substantially continuously spaced from a side of the adapter as the duct is pivoted relative to the pivot axis 68. For instance, to provide continuous spacing, the substantially curved wall can extend at a substantially constant radius about the pivot axis 68. Providing a substantially continuous spacing between the curved wall and the adapter can help reduce pinch points as the duct pivots relative to the adapter.

The pivot structure 37 can be configured to be pivotally mounted to the adapter 50. In the illustrated example, the pivot structure comprises a pivot pin 38 having a first end extending above the top wall 44a and a second end extending below the bottom wall 44b. The first and second ends of the pivot pin 38 are adapted to be received in a corresponding one of a first set of pivot holes 54a, 54b provided in the adapter 50. As shown, the adapter 50 can also include a second set of pivot holes 56a, 56b to permit selective mounting of the duct 24 to the opposite side of the adapter 50. Thus, the duct 24 may be mounted for pivoting out from either side of the adapter 50 to allow customization of the air distribution apparatus to guide air in various directions.

It is contemplated that a wide range of pivot structures 37 may be provided. For example, rather than a pivot pin 38, the pivot structure may comprise one or more pivot apertures adapted to receive a pivot pin from the adapter. In further examples, both the adapter and the pivot structure of the duct may include apertures that may be aligned to receive a separate pivot pin therethrough. It is also contemplated that other structures, such as hinge mechanisms, or the like, may be employed. Moreover, while the illustrated pivot structure provides a fixed pivot point, it is also contemplated that the pivot structure may travel as the duct is pivoted relative to the adapter. For example, the pivot structure may be configured such that the pivot axis travels along a linear and/or arcuate path as the duct pivots relative to the pivot axis.

The duct may pivot relative to the adapter in incremental or continuous adjustments throughout a wide variety of angles. For example, the duct may be capable of pivoting from approximately 0° to approximately 180°. In further examples, the duct may be capable of pivoting from approximately 0° to approximately 120°. In still further examples, the duct may be capable of pivoting from approximately 0° to approximately 90°. In the illustrated example, the duct is capable of pivoting from approximately 0° to approximately 45°.

Examples of ducts in accordance with the present invention can include at least one stop adapted to limit pivoting movement of the duct with respect to the housing. The stop may be adjustable such that the pivoting range of the duct with respect to the adapter may be adjusted to accommodate the preferences of a user. In further examples, the stop may be fixed such that the pivoting range of the duct is not adjustable, but predetermined when manufacturing the air distribution apparatus.

In the illustrated embodiment, the duct includes an extension stop 40 configured to define a maximum extended position of the duct with respect to the adapter 50. Although a single extension stop 40 may be provided, FIG. 4 depicts a first extension stop 40 provided on the top wall 44a and a second extension stop 42 provided on the bottom wall 44b. Providing a first and second extension stop can reduce stress on the pivot structure due to bending moments that might otherwise develop with a single extension stop. As shown in FIG. 2B, the extension stops 40, 42 are adapted to interact with a surface of the adapter 50 to limit extension of the duct with respect to the adapter. Although not required, the adapter 50 may include a slot, such as the illustrated arcuate slot 60, adapted to receive the upper extension stop 40. Although not shown, the adapter may include a similar slot adapted to receive the lower extension stop 42. Providing slots may be beneficial in applications where the depth of the adapter 50 is increased to accommodate other aspects of the adapter, such as a latching structure as discussed more fully below. The adapter 50 may also include an optional slot, such as an optional arcuate slot 58, adapted to receive the upper stop 40 if the pivot structure 37 of the duct is mounted on the opposite side of the adapter 50. Although not shown, the adapter may also include a similar slot, opposed to the arcuate slot 58, adapted to similarly receive the lower stop 42 when the duct is mounted on the opposite side of the adapter 50.

The duct 24 can also include a retraction stop 25 configured to define a maximum retracted position of the duct 24 with respect to the adapter 50. For example, as shown in FIG. 2A, the retraction stop 25 is adapted to interact with an outer surface of the adapter 50 to limit the extend to which the duct 24 may be retracted within the adapter 50. As further illustrated in FIGS. 2A and 2B, the retraction stop 25 can comprise a protrusion that extends outside of the adapter in both the retracted and extended positions. The illustrated extended protrusion can function as a handle to permit a user to apply force to the duct to pivot the duct 24 with respect to the adapter 50.

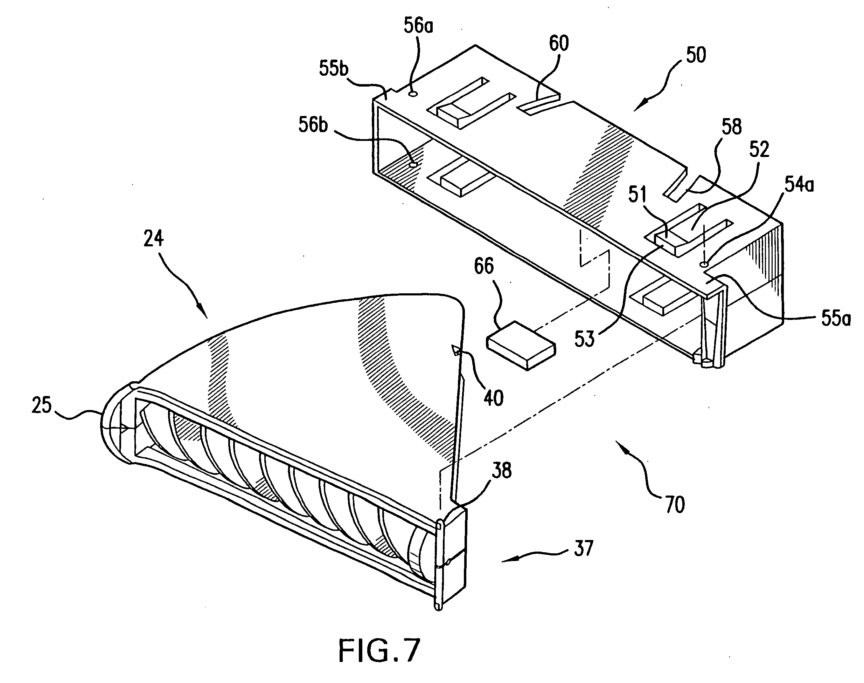

The duct assembly 70 may also include a device adapted to encourage maintenance of a desired pivotal orientation of the duct 24 with respect to the adapter 50. In one example, the device can comprise a low friction material that provides an interference fit between the duct and the adapter. For instance, the low friction material may comprise a low friction polymer or the like. In further examples, the device can comprise a friction material to increase friction between the duct and the adapter. For example, as shown in FIG. 7, the device comprises a friction material 66 adapted to provide a desired resistance to pivoting between the duct 24 and the adapter 50. The friction material can comprise a wide range of materials and structures to facilitate maintenance of the desired angular relationship. For instance, the friction material may comprise a felt material or other compressible material. In further examples, the friction material can comprise protrusions from one or both of the duct and adapter to provide a desired level of pivotal resistance. Moreover, complementary protrusions and recesses may be employed to provide discrete pivotal orientations. For example, one or more detents, grooves, or other recesses may be formed on one or both of the duct and adapter. One or more complementary dimples, ribs or other protrusions may be formed on the other or both of the duct and adapter. The recesses and protrusions may cooperate with one another at predetermined pivotal orientations to help maintain a predetermined angular relationship between the duct and adapter. Still further, the duct and adapter may be designed with an interference between at least portions of the duct and adapter to help maintain the desired orientation. The pivot structure can also be designed to inhibit undesirable rotation. For example, the pivot structure can be designed to require a minimum moment about the pivot axis before the duct pivots relative to the adapter.

The process of pivotally attaching the duct 24 with respect to the adapter 50 to form the duct assembly 70 is illustrated in FIG. 7. As shown, the optional friction material 66 may be attached to an interior surface of the adapter such that the friction material engages a surface of the duct 24 once assembled. Next, the pivot structure 37 is attached to the adapter 50 to provide a desired pivotal relationship between the duct 24 and the adapter 50. For example, the first and second ends of the pivot pin 38 may be inserted in the first pair of pivot holes or the second pair of pivot holes. If the pivot axis 68 is desired to be located on the right side of the adapter 50, the first and second ends of the pivot pin 38 may be inserted in respective first and second pivot holes 54a, 54b of the first set of pivot holes. Alternatively, if the pivot axis 68 is desired to be located on the left side of the adapter, the first and second ends of the pivot pin 38 may be inserted in respective first and second pivot holes 56a, 56b of the second set of pivot holes.

In the illustrated embodiment, once assembled, the duct 24 may pivot within a limited range with respect to the adapter 50 to change the direction of the air stream passing through the air outlet opening 46. For instance, as shown in FIGS. 2A and 2B, the duct 24 may be retracted along retraction direction 43b until the retraction stop 25 engages an outer edge of the adapter 50. FIG. 2A illustrates the duct 24 in the fully retracted position wherein the air outlet opening 46 faces a first undiverted direction 46a. In order to change the undiverted direction, a user may pull the handle (e.g., the retraction stop 25) to pivot the duct 24 with respect to the pivot axis 68 along extension direction 43a until the extension stops 40, 42 engage the respective slots in the adapter 50. FIG. 2B illustrates the duct 24 in the fully extended position wherein the air outlet opening 46 faces a second undiverted direction 47a. Comparing FIGS. 2A and 2B, the first undiverted direction 46a extends at an angle, for example about 45°, with respect to the second undiverted direction 47a. Accordingly, by way of the pivoting duct arrangement, the direction of the air stream may be changed by a predetermined angle, such as about 45°, by simply pivoting the duct 24 with respect to the adapter 50. Once the desired angle is achieved, the user may release the retraction stop 25 (e.g., handle) wherein the friction material 66 will encourage maintenance of the desired angle between the duct and the adapter. Therefore, the friction material 66 may maintain the duct at the fully retracted position, the fully extended position, or some position between the fully retracted and extended positions.

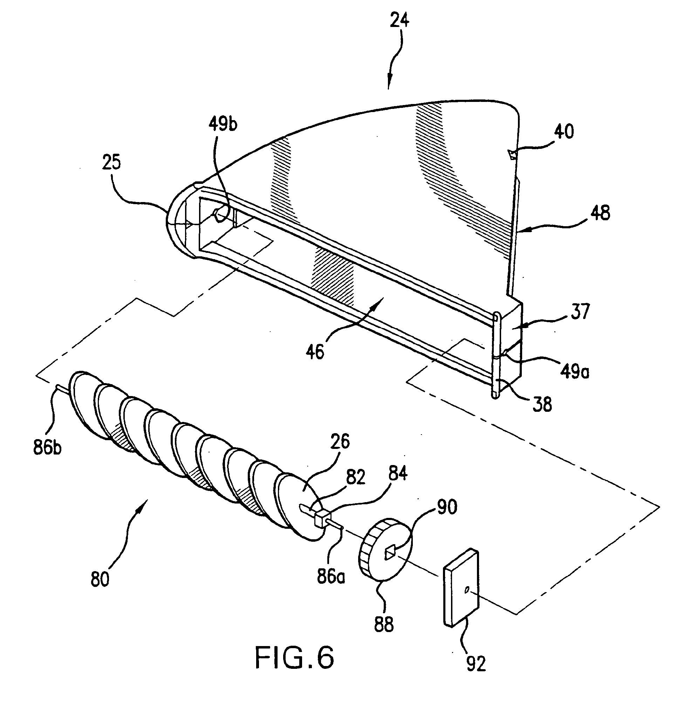

Duct assemblies in accordance with examples of the present invention may include an optional air diverter apparatus adapted to change the undiverted direction of air flowing from the air outlet opening. Air diverter apparatus may include a variety of structures adapted to change the air flow direction. For example, the air diverter apparatus can include a plurality of vanes adapted to move with respect to the duct. In one example, the vanes may each have a rotation axis, wherein the rotation axes are parallel with respect to one another. The vanes may be linked such that each vane rotates simultaneously about a corresponding rotational axis. In the illustrated embodiment, an air diverter apparatus 80 is provided with a plurality of vanes 26 that are fixedly mounted to a rotation shaft 82. The vanes 26 can therefore be arranged such that rotation of the shaft 82 results in corresponding simultaneous rotation of each of the vanes 26. As best shown in FIGS. 3 and 6, the vanes 26 can comprise a plurality of disks that are attached at a predetermined angle relative to the shaft 82. Various angles can be selected depending on the particular application. In the illustrated embodiment, the vanes 26 are mounted at a 45° angle with respect to the shaft 82. In further examples, the vanes can be mounted at a 30° angle with respect to the shaft although other angles may be selected in further embodiments. With further reference to FIGS. 3 and 6, the air diverter apparatus 80 can comprise an adjustment wheel 88 configured to selectively rotate the shaft 82. The wheel may be formed integrally with the shaft or may be nonrotatably attached to the shaft. In the illustrated example, the shaft 82 can be provided with a keyed portion 84 configured to be received in an aperture 90 of the adjustment wheel 88. Once the keyed portion 84 is received in the aperture 90, rotation of the wheel 88 will result in a corresponding rotation of the shaft 82.

The air diverter apparatus 80 may also include a device adapted to encourage maintenance of a desired rotational orientation of the vanes 26 relative to the adapter 50. The device can comprise material or structures similar to the device described with respect to the friction material 66 above. For example, the device can comprise a low friction material that provides an interference fit between the adjustment wheel 88 and an inside surface of the duct 24. The low friction material, for example, may comprise a low friction polymer or the like. In further examples, the device can comprise a friction material to increase friction between the duct and the adapter. For example, as shown in FIG. 6, the device comprises a friction material 92 adapted to provide a desired resistance to pivoting between the adjustment wheel 88 and the duct 24. In the illustrated embodiment, the friction material 92 can include a central aperture to permit passage of a first pivot pin 86a of the rotation shaft 82. In further embodiments, the friction material 92 may be provided without a central aperture. For example, the friction material 92 may be located entirely on one side of the first pivot pin 86a wherein less than half of the wheel 88 is engaged at one time. The friction material can comprise a wide range of materials and structures to facilitate maintenance of the desired rotational relationship. For instance, the friction material may comprise a felt material or other compressible material.

Assembly of the air diverter apparatus 80 to the duct 24 is described with respect to FIG. 6. The friction material 92, if provided, may be attached to an interior surface of the duct 24 adjacent a first pivot hole 49a in the duct 24. The first pivot pin 86a is inserted through the aperture 90 in the adjustment wheel 88. The adjustment wheel 88 is then axially moved with respect to the rotation shaft 82 until the key 84 of the shaft 82 is nonrotatably received in the aperture 90 of the wheel 88. The air diverter apparatus 80 is then positioned within the air outlet opening 46 of the duct 24 with the first pivot pin 86a received in the first pivot hole 49a and a second pivot pin 86b received in a second pivot hole 49b. Once appropriately attached, the pivot pins 86a, 86b and the pivot holes 49a, 49b can permit infinite rotation of the rotation shaft 82 about a rotation axis. Although not shown, the air diverter apparatus can also include at least one stop adapted to limit a rotational movement of the air diverter apparatus relative to the duct.

A user may adjust the air diverter apparatus 80 by rotating the wheel 88 until a desired rotational orientation between the vanes 26 and the duct 24 is achieved. Once the wheel is released, the friction material 92 may facilitate maintenance of the desired rotational relationship between the vanes 26 and the duct 24. The air diverter apparatus 80, if provided, can therefore change the direction of air flowing through the air outlet opening 46. For example, a user may rotate the wheel wherein the direction of air flowing through the air outlet opening can fluctuate on either side of the undiverted direction by the angle between the vanes 26 and the rotation shaft 82. For example, as mentioned previously, the illustrated embodiment includes vanes 26 oriented at approximately 45° with respect to the rotation axis 82. Accordingly, in the retracted position shown in FIG. 2A, rotation of the adjustment wheel 88 can result in a diverted air path extending along a diverted direction 46b that is +45° from the undiverted direction 46a. The adjustment wheel 88 may be further rotated such that a diverted air path extends along another diverted 46c direction that is -45° from the undiverted direction 46a. Likewise, in the extended position shown in FIG. 2B, rotation of the adjustment wheel 88 can result in a diverted air path extending along a diverted direction 47b that is +45° from the undiverted direction 47a. The adjustment wheel 88 may be further rotated such that a diverted air path extends along another diverted 47c direction that is -45° from the undiverted direction 47a. Therefore, the air diverter apparatus 80 can either add to or subtract from the change in air direction achieved by pivoting the duct relative to the adapter. For example, the duct 24 may be pivoted 45° about the pivot axis 68 to the maximum extended position illustrated in FIG. 2B. The adjustment wheel 88 of the air diverter apparatus 80 may then be rotated to change the air stream direction an additional 45° such that the final diverted direction 47b extends approximately 90° from the first undiverted direction 46a. The adjustment wheel 88 of the air diverter apparatus 80 may be further rotated to subtract from the change in direction achieved by pivoting the duct relative to the adapter. For example, the adjustment wheel of the air diverter apparatus 80 may be rotated to reduce the change in air stream direction by 45° such that the final diverted direction 47c extends substantially parallel with respect to the first undiverted direction 46a. It will therefore be appreciated that pivoting the duct relative to the adapter and rotating the air diverter apparatus relative to the duct can achieve a wide variety of air diversion paths. For instance, as shown in FIGS. 2A and 2B, the air path can fluctuate between one maximum diverted direction 46c in the retracted position and another maximum diverted direction 47b in the extended position.

The adapter 50, if provided, can be configured to be attached with respect to an opening 23 of an air distribution housing 22. For instance, as shown in FIG. 7, the adapter may include one or more latches 52 adapted to engage the outer wall 21 of the air distribution apparatus 20. In the illustrated embodiment, the adapter 50 includes two upper latches 52 and two lower latches although more or less latches may be employed in further embodiments. Each latch can include a ramp surface 51 and an abutment surface 53. To install the adapter 50, a rear end of the adapter is first inserted in the opening 23 of the air distribution housing 22. The adapter is further inserted until shoulders 55a, 55b of the adapter 50 engage an outer surface of the outer wall 21. Once the shoulders engage the outer wall, the latches 52 snap behind the outer wall 21 such that the abutment surface 53 engages the rear surface of the outer wall 21 to trap the adapter 50 relative to the housing 22.

Components of the duct assembly 70 can comprise various materials or combinations of materials to provide sufficient structural integrity while minimizing the weight of the air distribution housing and costs of the materials to produce the housing. For example, the adapter 50, duct 24 and/or components of the air diverter apparatus 80 may be fabricated from materials including, but not limited to, a plastic, a metallic and/or a composite material or the like.

One or more duct assemblies 70 in accordance with aspects of the present invention can be used with various air distribution housings. For example, the illustrated air distribution housing 22 is provided with a first duct assembly 70a, a second duct assembly 70b, a third duct assembly 70c, and a fourth duct assembly 70d. Although four duct assemblies 70a, 70b, 70c, 70d are illustrated, more or less than four duct assemblies may also be provided. Moreover, although not shown, the air distribution housing may also accommodate air return vents and/or controls for a heating, ventilation and air conditioning (HVAC) unit.

One or more duct assemblies 70 in accordance with aspects of the present invention can also be positioned in a wide range of orientations with respect to the air distribution housing. For example, one or more of the duct assemblies may be provided on a top side 35 of the housing. In further examples, one or more duct assemblies may be positioned about a periphery of the air distribution housing. For example, one or more duct assemblies may be provided on a right side 34 and/or a left side 36 of the housing. In the illustrated example, the first and second duct assemblies 70a, 70b are arranged on a front side 30 of the air distribution housing 22 while the third and fourth duct assemblies 70c, 70d are arranged on a rear side 32 of the air distribution housing 22. Arranging the duct assemblies on the front side and rear side can permit each duct assembly to direct air in a direction generally away from the respective front side or rear side and to further guide air in a direction substantially parallel with the respective front side or rear side.

For example, with reference to the third duct assembly 70c, the duct assembly may guide the air path along the first undiverted direction 46a extending generally away and perpendicular from the rear side 32 of the air distribution housing 22. By adjusting the air diverter apparatus 80, in the retracted position, the duct assembly 70c can deflect the air stream within a range from about +/-45° from the first undiverted direction 46a along direction 46b (i.e., by deflecting the air stream about +45° with respect to the pivot axis 68) or along direction 46c (i.e., by deflecting the air stream about -45° with respect to the pivot axis 68).

As further illustrated by the fourth duct assembly 70d of FIG. 1, the duct 24 may be pivoted outward within a range of about 0° to about +45° with respect to the pivot axis 68. As shown with reference to the fourth duct assembly 70d the duct may be pivoted to the fully extended position to provide an air path extending along the second undiverted direction 47a that is about +45° from the first undiverted direction 46a. Therefore, in the fully extended position, the illustrated duct may guide the air path in a direction generally away from the rear side 32 and generally toward the right side 34 of the air distribution housing 22 along the second undiverted direction 47a. By adjusting the air diverter apparatus 80, the duct may guide the air path in a direction generally away and perpendicular from the rear side 32 along diverted direction 47c. Still further, the air diverter apparatus 80 can also be adjusted to guide the air path in a direction generally parallel to the rear side 32 from the left side 36 to the right side 34 of the air distribution housing 22 along diverted direction 47b.

The rear side 32 of the air distribution housing 22 illustrates both the third and fourth duct assemblies 70c, 70d being mounted such that each duct can guide the air path in a direction generally parallel to the rear side 32 from the left side 36 to the right side 34 of the air distribution housing. It is contemplated that one or both of the duct assemblies may be reversed such that one or both of the duct assemblies act to guide the air path in a direction generally parallel to the rear side from the right side to the left side of the air distribution housing. For example, the second duct assembly 70b is illustrated as being mounted such that the duct may guide the air path in a direction generally parallel to the front side 30 from the right side 34 to the left side 36 of the air distribution housing 22 along diverted direction 47b.

It is therefore contemplated that one or more duct assemblies 70 may be mounted in various orientations to accommodate various environments. For example, all of the duct assemblies 70 may be mounted to guide the air path in a direction generally parallel to the respective side from the right side to the left side of the air distribution housing. In further embodiments, all of the duct assemblies 70 may be mounted to guide the air path in a direction generally parallel to the respective side from the left side to the right side of the air distribution housing. Still further, duct assemblies may be arranged such that at least one duct assembly can guide an air path in a direction generally parallel to a side from the left side to the right side while at least another duct assembly can guide an air path in a direction generally parallel to a side from the right side to the left side of the air distribution housing.

As shown in FIG. 1, each duct 24a, 24b, 24c, 24d is indirectly pivotally connected to the air distribution housing 22 by way of an adapter 50. Providing the air distribution assembly 20 with an adapter can be beneficial to retrofit existing air distribution assemblies without replacement of the existing air distribution housing. Although not shown, each duct may also be configured to be directly pivotally connected to the air distribution housing 22 without the use of an adapter. Attaching the duct without an adapter can reduce the number of parts necessary for providing the air distribution apparatus.

Air distribution apparatus in accordance with the present invention can have a wide range of applications. As mentioned previously, examples of an air distribution apparatus can be provided for mounting to a wall surface of an interior area of a vehicle. For instance, the air distribution apparatus can be provided for mounting to a ceiling, side wall, floor or other surfaces of a vehicle. Moreover, air distribution apparatus herein may be used in a wide variety of vehicles. For example, vehicles incorporating one or more air distribution apparatus may comprise motorized or nonmotorized vehicles. Examples of vehicles can comprise recreational vehicles (RV), pull trailers or other vehicles. Certain vehicles can also comprise pop-out living spaces that may be collapsed during transportation and later deployed once parked at a desired location. In such examples, one or more air distribution apparatus can be mounted on a ceiling or other structure to selectively direct air into one or more of the pop-out living areas. For example, the air distribution apparatus may be mounted to a surface, such as a ceiling surface, wherein an air stream may be directed toward the front or rear of the main interior area of the vehicle. In addition, or alternatively, the air stream may be directed laterally toward one or more pop-out living areas of the vehicle.

## Claims

1. An air distribution apparatus (20) comprising:
an air distribution housing (22) including an outer wall (21) and an interior area (29); and
a duct pivotally (24a, 24b, 24c, 24d) connected to the housing (22) and configured to pivot about a first axis (68) from a retracted position to an extended position, wherein a portion of the duct (24a, 24b, 24c, 24d) is received in the interior area (29) of the housing (22) in the retracted position and the portion of the duct (24a, 24b, 24c, 24d) extends outside of the interior area (29) in the extended position and wherein the duct (24) includes an air outlet opening (46) **characterized in that**
the outlet opening (46) is provided with an air diverter apparatus (80) rotatable about a second axis (82) and adapted to selectively change the direction of air flowing from the air outlet opening (46), wherein the first and second axes are arranged orthogonally to each other.

2. The air distribution apparatus (20) of claim 1, wherein
an adapter (50) is configured to be attached with respect to an opening (23) of the air distribution housing (22); and the duct (24) pivotally connected to the adapter (50) and configured to pivot about an axis from a retracted position to an extended position with respect to the adapter (50).

3. The air distribution apparatus of claim 2, further comprising an air distribution housing (22) including an interior area (29) and an outer wall (21) defining an opening (23), wherein the adapter (50) is attached with respect to the opening (23) of the air distribution housing (22).

4. The air distribution apparatus of claim 3, wherein a portion of the duct (24) is received in the interior area of the housing in the retracted position and the portion of the duct extends outside of the interior area in the extended position.

5. The air distribution apparatus to any of claims 1 or 4, wherein the duct includes an air outlet opening that faces a first direction (46a) in the retracted position and a second direction (47a) in the extended position, wherein the first direction (46a) extends at an angle with respect to the second direction (47a).

6. The air distribution apparatus (20) of any of claims 1 to 5, wherein the air diverter apparatus (80) includes a plurality of vanes (26) adapted to move with respect the duct (24).

7. The air distribution apparatus of claim 6, wherein the plurality of vanes (26) are adapted to rotate with respect to the air outlet opening of the duct (24).

8. The air distribution apparatus of claims 1 to 7, wherein the duct (24) has a substantially triangular shape with a first side (45a), a second side (45b) and a third side (45c).

9. The air distribution apparatus of claim 8, wherein the first side (45a) of the duct (24) includes an air outlet opening (46), the second side (45b) of the duct includes an air inlet opening (48), and the third side (45c) of the duct includes a substantially closed portion.

10. The air distribution apparatus of any of claims 1 to 9, wherein the angle of the first undiverted direction (46a) with respect to the second undiverted direction (47a) is about 45°.

11. The air distribution apparatus of claim 10, wherein the air diverter apparatus (80) is configured to divert an air path extending along a diverted direction that is + 45° from the second undiverted direction to add to the angle when the duct (24) is in the extended position.

12. The air distribution apparatus of claim 10, wherein the air diverter apparatus (80) is configured to divert an air path extending along a diverted direction that is - 45° from the second undiverted direction to subtract from the angle when the duct (24) is in the extended position.

13. The air distribution apparatus of claims 6 or 7, wherein the vanes (26) are attached at a predetermined angle with respect to a shaft such that rotation of the shaft results in corresponding simultaneous rotation of each of the vanes (26).

14. The air distribution apparatus of claim 13, wherein the predetermined angle of the vanes (26) with respect to the shaft comprises a 45° angle.

## Patentansprüche

1. Luftverteilungsvorrichtung (20) aufweisend:
ein Luftverteilungsgehäuse (22), das eine äußere Wand (21) und eine innere Zone (29) beinhaltet; und
einen Kanal (24a, 24b, 24c, 24d), der mit dem Gehäuse (22) schwenkbar verbunden ist und konfiguriert ist, um aus einer zurückgezogenen Position in eine ausgefahrene Position um eine erste Achse (68) zu schwenken, wobei ein Abschnitt des Kanals (24a, 24b, 24c, 24d) in der zurückgezogenen Position in der inneren Zone (29) des Gehäuses (22) aufgenommen ist und der Abschnitt des Kanals (24a, 24b, 24c, 24d) sich in der ausgefahrenen Position sich aus der innenliegenden Zone (29) heraus erstreckt und wobei der Kanal (24) eine Luftauslassöffnung (46) beinhaltet, **dadurch gekennzeichnet, dass**
die Auslassöffnung (46) mit einer Luftumlenkvorrichtung (80) versehen ist, die um eine zweite Achse (82) rotiert werden kann und ausgebildet ist, die Richtung von aus der Luftauslassöffnung (46) strömender Luft wahlweise zu ändern, wobei die ersten und zweiten Achsen senkrecht zueinander angeordnet sind.

2. Luftverteilungsvorrichtung (20) nach Anspruch 1, bei der
ein Adapter (50) so konfiguriert ist, um bezüglich einer Öffnung (23) des Luftverteilungsgehäuses (22) befestigt zu werden; und der Kanal (24) mit dem Adapter (50) schwenkbar verbunden ist und konfiguriert ist, um aus einer zurückgezogenen Position in eine ausgefahrene Position bezüglich des Adapters (50) um eine Achse zu schwenken.

3. Luftverteilungsvorrichtung nach Anspruch 2, welche weiter ein Luftverteilungsgehäuse (22) aufweist, das eine innere Zone (29) und eine äußere Wand (21) beinhaltet, die eine Öffnung (23) definiert, wobei der Adapter (50) bezüglich der Öffnung (23) des Luftverteilungsgehäuses (22) befestigt ist.

4. Luftverteilungsvorrichtung nach Anspruch 3, bei der ein Abschnitt des Kanals (24) in der inneren Zone des Gehäuses in der zurückgezogenen Position aufgenommen ist und der Abschnitt des Kanals sich in der ausgefahrenen Position aus der inneren Zone heraus erstreckt.

5. Luftverteilungsvorrichtung nach einem der Ansprüche 1 oder 4, bei welcher der Kanal eine Luftauslassöffnung beinhaltet, die in der zurückgezogenen Position in eine erste Richtung (46a) weist und in der ausgefahrenen Position in eine zweite Richtung (47a) weist, wobei sich die erste Richtung (46a) unter einem Winkel bezüglich der zweiten Richtung (47a) erstreckt.

6. Luftverteilungsvorrichtung (20) nach einem der Ansprüche 1 bis 5, bei der die Luftumlenkvorrichtung (80) eine Mehrzahl von Schaufeln (26) beinhaltet, die ausgebildet sind, sich bezüglich des Kanals (24) zu bewegen.

7. Luftverteilungsvorrichtung nach Anspruch 6, bei der die Mehrzahl von Schaufeln (26) ausgebildet sind, um bezüglich der Luftauslassöffnung des Kanals (24) zu rotieren.

8. Luftverteilungsvorrichtung nach einem der Ansprüche 1 bis 7, bei welcher der Kanal (24) eine im Wesentlichen dreieckige Gestalt mit einer ersten Seite (45a), einer zweiten Seite (45b) und einer dritten Seite (45c) aufweist.

9. Luftverteilungsvorrichtung nach Anspruch 8, bei der die erste Seite (45a) des Kanals (24) eine Luftauslassöffnung (46) beinhaltet, die zweite Seite (45b) des Kanals eine Lufteinlassöffnung (48) beinhaltet und die dritte Seite (45c) des Kanals einen im Wesentlichen geschlossenen Abschnitt beinhaltet.

10. Luftverteilungsvorrichtung nach einem der Ansprüche 1 bis 9, bei welcher der Winkel der ersten nicht-abgelenkten Richtung (46a) bezüglich der zweiten nicht-abgelenkten Richtung (47a) ungefähr 45° beträgt.

11. Luftverteilungsvorrichtung nach Anspruch 10, bei der die Luftumlenkvorrichtung (80) konfiguriert ist, um einen Luftweg umzulenken, der sich entlang einer umgelenkten Richtung erstreckt, bei der zur zweiten nicht-abgelenkten Richtung +45° zu dem Winkel addiert sind, wenn sich der Kanal (24) in der ausgefahrenen Position befindet.

12. Luftverteilungsvorrichtung nach Anspruch 10, bei der die Luftumlenkvorrichtung (80) konfiguriert ist, um einen Luftweg umzulenken, der sich entlang einer umgelenkten Richtung erstreckt, bei der von der zweiten nicht-abgelenkten Richtung -45° von dem Winkel subtrahiert sind, wenn sich der Kanal (24) in der ausgefahrenen Position befindet.

13. Luftverteilungsvorrichtung nach Anspruch 6 oder 7, bei der die Schaufeln (26) bei einem vorbestimmten Winkel bezüglich eines Schaftes befestigt sind, derart, dass ein Rotieren des Schaftes zu einem entsprechenden gleichzeitigen Rotieren einer jeden der Schaufeln (26) führt.

14. Luftverteilungsvorrichtung nach Anspruch 13, bei welcher der vorbestimmte Winkel der Schaufeln (26) bezüglich des Schaftes einen Winkel von 45° aufweist.

## Revendications

1. Appareil de distribution d'air (20) comprenant :
un boîtier de distribution d'air (22) comprenant une paroi externe (21) et une zone intérieure (29) ; et
un conduit (24a, 24b, 24c, 24d) raccordé de manière pivotante au boîtier (22) et configuré pour pivoter autour d'un premier axe (68) d'une position rétractée à une position étendue, dans lequel une partie du conduit (24a, 24b, 24c, 24d) est reçue dans la zone intérieure (29) du boîtier (22) dans la position rétractée et la partie du conduit (24a, 24b, 24c, 24d) s'étend à l'extérieur de la zone intérieure (29) dans la position étendue et dans lequel le conduit (24) comprend une ouverture de sortie d'air (46), **caractérisé en ce que** :
l'ouverture de sortie (46) comporte un appareil inverseur d'air (80) pouvant tourner autour d'un second axe (82) et adapté pour changer sélectivement la direction de l'air s'écoulant par l'ouverture de sortie d'air (46), dans lequel les premier et second axes sont agencés de manière orthogonale l'un par rapport à l'autre.

2. Appareil de distribution d'air (20) selon la revendication 1, dans lequel :
un adaptateur (50) est configuré pour être fixé par rapport à une ouverture (23) du boîtier de distribution d'air (22) ; et le conduit (24) est raccordé de manière pivotante à l'adaptateur (50) et configuré pour pivoter autour d'un axe d'une position rétractée à une position étendue par rapport à l'adaptateur (50).

3. Appareil de distribution d'air selon la revendication 2, comprenant en outre un boîtier de distribution d'air (22) comprenant une zone intérieure (29) et une paroi externe (21) définissant une ouverture (23), dans lequel l'adaptateur (50) est fixé par rapport à l'ouverture (23) du boîtier de distribution d'air (22).

4. Appareil de distribution d'air selon la revendication 3, dans lequel une partie du conduit (24) est reçue dans la zone intérieure du boîtier dans la position rétractée et la partie du conduit s'étend à l'extérieur de la zone intérieure dans la position étendue.

5. Appareil de distribution d'air selon l'une quelconque des revendications 1 ou 4, dans lequel le conduit comprend une ouverture de sortie d'air qui fait face à une première direction (46a) dans la position rétractée et une seconde direction (47a) dans la position étendue, dans lequel la première direction (46a) s'étend selon un angle par rapport à la seconde direction (47a).

6. Appareil de distribution d'air (20) selon l'une quelconque des revendications 1 à 5, dans lequel l'appareil inverseur d'air (80) comprend une pluralité de pales (26) adaptées pour se déplacer par rapport au conduit (24).

7. Appareil de distribution d'air selon la revendication 6, dans lequel la pluralité de pales (26) est adaptée pour tourner par rapport à l'ouverture de sortie d'air du conduit (24).

8. Appareil de distribution d'air selon les revendications 1 à 7, dans lequel le conduit (24) a une forme sensiblement triangulaire avec un premier côté (45a), un deuxième côté (45b) et un troisième côté (45c).

9. Appareil de distribution d'air selon la revendication 8, dans lequel le premier côté (45a) du conduit (24) comprend une ouverture de sortie d'air (46), le deuxième côté (45b) du conduit comprend une ouverture d'entrée d'air (48) et le troisième côté (45c) du conduit comprend une partie sensiblement fermée.

10. Appareil de distribution selon l'une quelconque des revendications 1 à 9, dans lequel l'angle de la première direction non inversée (46a) par rapport à la seconde direction non inversée (47a) est d'environ 45°.

11. Appareil de distribution d'air selon la revendication 10, dans lequel l'appareil inverseur d'air (80) est configuré pour inverser une trajectoire d'air s'étendant le long d'une direction inversée qui est de +45° par rapport à la seconde direction non inversée à ajouter à l'angle lorsque le conduit (24) est dans la position étendue.

12. Appareil de distribution d'air selon la revendication 10, dans lequel l'appareil inverseur d'air (80) est configuré pour inverser une trajectoire d'air s'étendant le long d'une direction inversée qui est de -45° par rapport à la seconde direction non inversée à soustraire de l'angle lorsque le conduit (24) est dans la position étendue.

13. Appareil de distribution d'air selon la revendication 6 ou 7, dans lequel les pales (26) sont fixées selon un angle prédéterminé par rapport à un arbre de sorte que la rotation de l'arbre se traduit par une rotation correspondante simultanée de chacune des pales (26).

14. Appareil de distribution d'air selon la revendication 13, dans lequel l'angle prédéterminé des pales (26) par rapport à l'arbre comprend un angle de 45°.
